# EUROPEAN PATENT APPLICATION

(11) **EP 0 836 295 A2**
(43) Date of publication of application: **15.04.1998**
(21) Application number: 97111728.8
(22) Date of filing: 10.07.1997
(51) Int. Cl.: H04L 12/24, H04Q 3/00

(54) **Control of a telephone switching system over a digital information network**

(30) Priority: 23.09.1996 EP 96115221
(71) Applicant: International Business Machines Corporation, Armonk, N.Y. 10504 (US)
(72) Inventor: Markgraf, Frank, 69207 Sandhausen (DE); Schottmüller, Claus, 76131 Karlsruhe (DE); Wittinger, Clemens, 67061 Ludwigshafen (DE)
(74) Representative: Teufel, Fritz, Dipl.-Phys.

(57) **Abstract**

Disclosed is a mechanism to integrate a telephone switching system (23) into a wide area (WAN) or local area (LAN) computer network, where in particular, a telephone switching center is controlled by a server computer (22) utilizing a Hypertext Transfer Protocol (HTTP), which is connected to a WorldWideWeb (WWW) network.

Known computer telephone integration (CTI) solutions are integrated on a network server and thus have the drawback that due to the various different operating system platforms, in particular in the area of Personal Computers or Workstations, an interface has to be adapted to each client's platform.

It is therefore proposed to provide, between a HTTP server (22) and the switching system (23), a control program (20) which enables control of a CTI application by the HTTP server (22), in order to integrate the functionality of a switching network into the HTTP server (22). The proposed application (20) provides an interface which uses a Universal Resource Locator (URL) specifying high level communicating functions which are independent of the respective interface (21) to the switching system or the CTI server.

## Description

The present invention pertains to integration of a telephone switching system into a wide area (WAN) or local area (LAN) computer network, where control of a telephone system is to be performed by use of a network communication protocol. In particular, the invention is concerned with control of a telephone switching center by a server computer utilizing a Hypertext Transfer Protocol (HTTP), which is connected to a WorldWideWeb (WWW) network.

Telephone switching systems are commonly used to control communication in a telephone switching network. These systems hereto comprise functional units called "switching centers" which provide functions mainly for setting up and terminating telephone connections between end devices of participiants of the switching network. Further, among others, functions are provided for forwarding telephone calls from a called person to a third person and for setting up telephone conference connections between multiple subscribers.

Thereupon these systems manage participiant admission rights and rules, control the adjustment of telephone end-devices, and record information about telephone connections having been switched, e.g. for telephone book-keeping or accounting purposes.

In order to provide the above functionality of circuit switched telephone networks in computers, recently Computer-Telephone Integration (CTI) applications have been developed. Hereby the functionality of switching networks is combined with functions of classical information processing. Exemplary CTI systems are a class of applications called "Call Centers" which enable routing of telephone calls to suitable contributors or collegues of a called participiant, and which provide a computer user with utilities allowing activation of telephone functions out of a standard application environment. Another class of exemplary applications are dialing support tools in the arena of "tele banking".

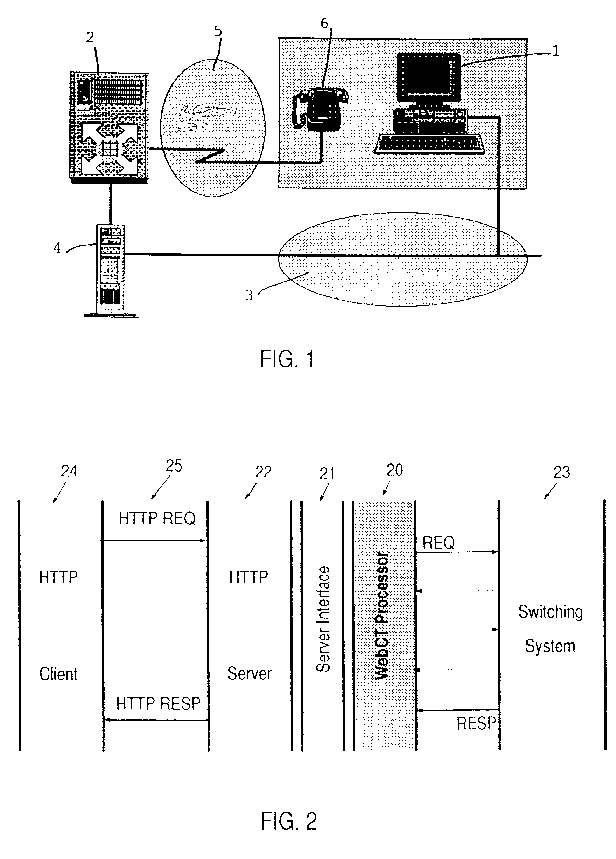

In a common architecture of existing CTI applications as depicted in Fig. 1, a first computer 1 is connected to a telephone switching system 2 over a physical interface 3, for instance the interface definition standard "V24" or the standardized Integrated Services Digital Network (ISDN). Through that connection control commands and messages can be exchanged between the first computer and the switching system according to a defined communication protocol. On the other side, a second computer 4, as a server for the locally or distantly located applications (clients), provides the functionality of the switching system to the applications.

There exist a number of proprietary or standardized CTI interfaces like the "TSAPI" by Novell, "TAPI" by Microsoft/Intel, or the prementioned "CallPath" by IBM. In general, the switching network functions are provided to the application programs as an application program interface (API). Those approaches are broadly discussed in an overview article by T. Nixon, entitled "The Design Considerations for Computer-Telephony Application Programming Interfaces and Related Components" and published in IEEE Communications Magazine vol. 34, no. 4 (1996), pages 43-47.

An according approach where a server is attached directly to a telephone switch - in contrast to a concept where a LAN server has to pass telephony signalling to the telephone switch (PBX) over the LAN - is disclosed in an article by S. Rudd, entitled "Where do CTI Applications really belong?", published in Business Communications Review, vol. 26, no. 2 (1996), pages 23-26. The advantage of that concept is that a CTI application not tightly coupled with LAN-attached databases will perform far better and cost much less.

A comparison between known mainframe PBX systems and an approach where a widely distributed group of CTI servers is linked through an isochronous broadband backbone, is given in an article by L. Goldberg, entitled "CTI Computer/Phone Fusion at LAN's Edge" and published in Electronic Design vol. 42, no. 22 (1994), pages 77-90. These servers can be configured to route calls, or they also may take on more specialized functions such as to becoming an interface to a public switch telephone network (PSTN) by acting as an automated attendant, voice-mail server, or any other network service.

There exist further generic solutions in the section of voice mail systems which are direcly attached to the Internet. Hereby a telephone call can be performed via a so-called Webphone service. An exemplary system is "DirectTalkMail" by IBM. An according voice mail system is disclosed in PCT application WO....... entitled "Voice Mail System" and assigned to the present assignee (Docketno. UK995024). That system provides access to voice mail over the Internet WWW. Hereby a user has to call up a page associated with a respective voice mail system, and to enter a mailbox number. A WWW server responds by transmitting a message to the voice mail system itself. A further request may be directed from the server to the voice mail system, which results in the voice mail system returning the actual audio data for the message to the user, to be played out.

In an article by R. Sergeant disclosed in IBM Technical Disclosure Bulletin vol. 38, no. 8 (1995), pages 415-418, and entitled "Inexpensive Multimedia Facility for Workstation", amongst others, an arrangement is described which allows a same graphical user interface (GUI) to be utilized when a standard desk telephone is used as audio input/output device. The GUI application sends a comment to a CTI server to ring the telephone at the user's desktop and to set up a connection.

A desktop telephone approach can also be integration of Lotus Notes by Lotus (IBM), where client specific modules handle messages received by a CTI server. These modules communicate via local Inter Process Communication (IPC) means with a Lotus Notes client. The Notes client then starts the appropriate actions for the Notes application, depending on the messages received, e.g. "Open specific Databases/Database entries" or "Start application specific actions".

Further in IBM Technical Disclosure Bulletin vol. 37, no. 1 (1994), pages 357-358, a "Global Multimedia Hyperspace" concept is disclosed. According to that concept, in case of no direct network link existing between two hyperdocument nodes, a telephone link is established between two corresponding computer systems. Hereby the hyperlinks need not be simply a local address, instead, it can be a telephone link to a node residing inside another hyperlinked document anyplace in the world. The advantage of this approach is integration of the world in a way analogous to the global Internet, global TV network or the global telephone network.

Known CTI solutions are integrated on a server, like Novell's Telephony Server, and thus have the drawback that due to the various different operating system platforms, in particular in the area of Personal Computers or Workstations, an interface has to be adapted to each client's platform i.e. particulary to be compatible with multiple different operating systems.

In order to solve that problem, according to the invention, between a HTTP (WWW) server and a switching system, a particular application is provided which enables control of a CTI application, i.e. of a switching unit of the switching system, through the HTTP server. In particular, it is proposed to integrate the functionality of a switching network into a WWW server.

Vis-a-vis existing server solutions for control of switching systems like "TSAPI" or "CallPath", the proposed application has the advantage to provide an interface which uses a Universal Resource Locator (URL). The URL, according to the invention, specifies high level communicating functions like 'set up connection', 'terminate connection', add participiant to connection' (telephone conference), or 'remove participiant', which are independent of the respective interface to the switching system or the CTI server.

Further command processing at the CTI interface is accomplished in accordance with a request-response protocol known from HTTP. Therefore intermediate states of command processing which occur due to protocol of interaction with the switching system, are handled by the processor and are thus transparent to the user.

In a typical scenario of running a CTI application in accordance with the invention, a user specifies a desired CTI function by using a common WWW browser. The browser forwards the functional request as a HTTP request to a respective WWW server known to the user. The server converts the request into arguments for a (e.g. CGI) executable function calling up the CTI application. The resulting message of executing the CTI application generated by the server is then re-transmitted to the WWW server. The server then informs the WWW browser about the result by using a respective HTTP response command.

Through use of HTTP being a standard protocol for the client-server communication, the proposed mechanism provides an open solution concept. Thereupon, WWW access is becoming very widespread, from many different platforms, and the according HTTP communication protocol, too, with respect to its use as WWW protocol on the Internet. The HTTP further enhances its relevance by its use in the so-called "Intranets" utilized proprietarily by networks of private firms.

The extensive widening of HTTP clients (WWW browsers) in nearly all today existing computer system platforms has the advantageous effect that, for the control of the switching system, no specialized application programs are required on the client's side. Moreover, according to state of the art solutions, these applications had to be developed separately for each operating system platform.

In the following, a preferred embodiment of the invention is described in more detail with reference to the accompanying drawings, where
Fig. 1 depicts a state-of-the-art architecture of a CTI application where a computer is connected to a telephone switching system over a physical interface;
Fig. 2 is a schematic view of the protocol interaction between a common telephone switching system and a HTTP client in accordance with the invention; and
Fig. 3a-d are protocol diagrams showing four different conversion cases of common telephony commands between a HTTP server and a telephone switching system.

In the preferred embodiment illustrated now with reference to Fig. 2, the invention is implemented as a control program (application) called "WebCT Processor" 20 which is interposed between an interface layer 21 provided by a HTTP (e.g. WWW) server 22 and a common (telephone) switching system 23. That processor 20 enables control of the switching system through the HTTP server 22. It is hereby emphasized that the invention is not restricted to the field of HTTP servers, but moreover can be used in all kinds of networks which utilize a generic network communication protocol. Further, besides realization as a computer program, the invention can also be implemented as a hardware control unit providing the beforehand cited functionality which is described in more detail in the following.

For an interaction between an HTTP client 24 and the switching system 23, the HTTP client 24 sends an according request 25 to the HTTP server 22, e.g. the request to set up a connection with a participiant identified by a subscriber number. In the preferred embodiment, the request 25 involves as uniform resource locator (URL) information coded telephony commands which have to be translated by the WebCT processor 20 into respective commands which can be interpreted by the switching system 23. Through the transferred URLs, the HTTP server 22 is instructed to start, over the server interface 21, an according telephony process related to the request 25. The server interface 21 to the switch can be a Common Gateway Interface (CGI) which is a de facto standard interface, the Netscape Server API (NSAPI) by Netscape, or another equivalent proprietary or standard interface. By that process the precited commands which are coded with respect to the respective interface 21, are delivered to the switching system 23. It is noted that in the preferred embodiment the above process is identical with the WebCT processor 20 which then takes over control of the communication with the switching system 23.

### WebCT/HTTP Server Interface

The telephony commands are transferred as parameters to the WebCT processor 20 which is called up by the HTTP server 22 via the server interface 21. The WebCT processor 20 controls the whole interaction with the switching system 23. The commands delivered to the WebCT processor 20 are coded as URLs according to the following exemplary URL syntax.

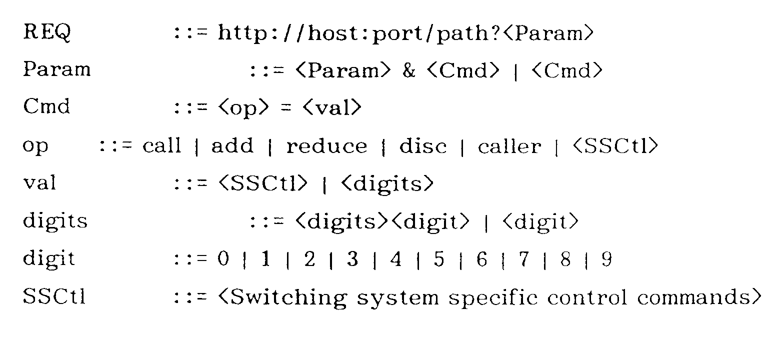

### Mapping of URLs onto Switching System Interface

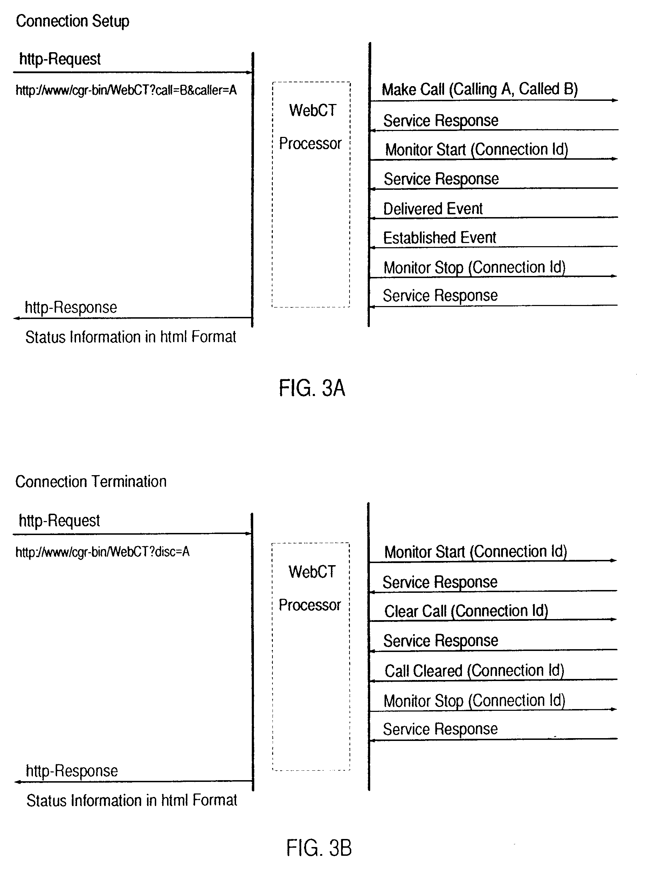

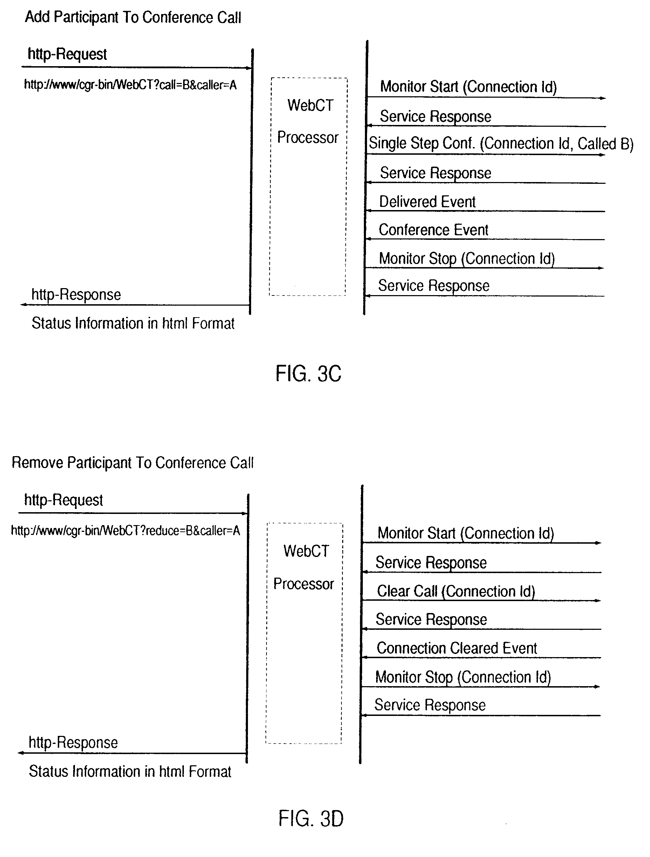

The diagrams depicted in Fig. 3a-d illustrate, for the following basic telelephony functions, conversion of the commands which are delivered to the WebCt processor through URLs:
a) Set up connection;
b) Terminating connection;
c) Add participiant to conference call;
d) Remove participiant of conference call;
wherein the switching system is controlled by use of a switching system control report (SSCtl).

The WebCT processor takes over the conversion (translation) of the HTTP commands into the communication protocol of the respective telephone switching system. Intermediate states which occur during the communication phase (see Fig. 3a-d, right columns which are concerned with processes running on the switching system side), are handled independently by the WebCT peocessor. After having finished an interaction with the switching system, a respective response to the user is generated.

In order to enable communication which is independent of the physical interface to the switching system, the commands to the switching system are described in accordance with the standard "CSTA" (Services for Computer Supported Telecommunications Applications). The commands depicted in each of the right columns of Fig. 3a-d, respectively, are taken from the latter standard.

### Mapping of the Communication Protocol via CGI

In case of using a Common Gateway Interface (CGI) as HTTP server interface, the submission of parameters is accomplished, depending on the respective HTTP request procedure, either via program parameter (GET) or via a standard entry (POST). Thereupon the server interface utilizes other parameters for handling further information concerning the HTTP client, which are not essential for the present invention.

Use of the CGI interface has the advantage that the implementation of the invention is simplified by existing and in the public available modules. The only disadvantage is that for each request a new process according to the pre-described WebCT processor has to be initiated. Use of a common application program interface (API) can avoid this drawback, but those interfaces are not standardized and therefore a solution according to the invention would depend on a specific HTTP server.

In the following, an exemplary code for handling WebCT requests over the CGI interface of the HTTP server is shown. The code is written by Larry Wall in "perl" language, wherein the used "CGI.pm" parsing module is developed by Lincoln D. Stein. It is noted that use of an other server interface, for instance "NSAPI" by Netscape, is also possible.

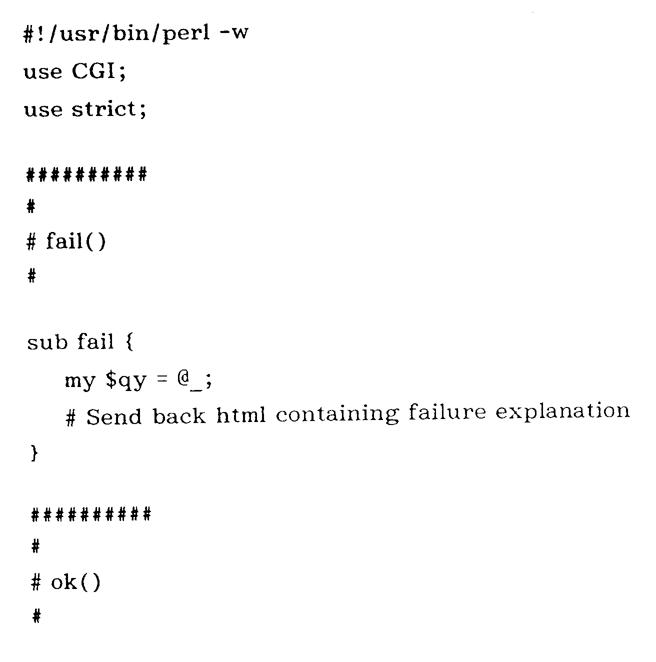

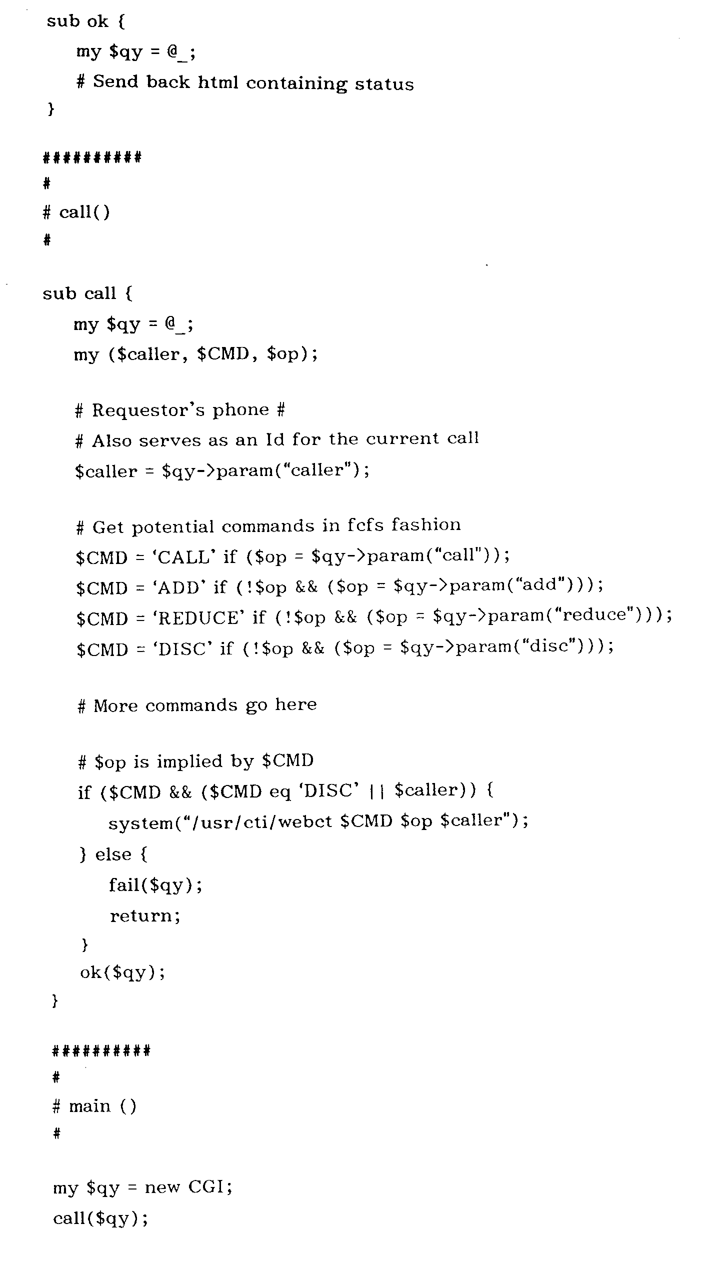

In the above exemplary code "#fail()" designates a routine for handling errors (parameters and return codes). Further "ok()" is a routine for signalling that everything in the call went well. By the routine "call()" first parameters and local variables are defined. The requestor's phone number is stored in the variable 'caller' which also serves as an identification (ID) for the current call. It is noted that the syntax "$..." designates definition of a variable.

To get WebCT commands in a "first checked first served fashion" means that commands have a kind of priority like CALL>ADD>REDUCE>DISC. For example, an URL like http://...?add=1234&call=1234&caller=4321 would actually make a call since 'call' is checked for first although 'add' comes first. This particular order is rather arbitrary and this code can be advantageously used as a kind of sanity check. It should be noted that the command 'DISC' (=DISCONNECT) does not need a caller anyway. Depending on an "if" condition, a call is started or not (i.e. a respective error message is sent back to the requestor), wherein the inner IF block concerns a check whether the process succeeded or not. If not, a CGI parameter error (failure) is sent back to the requestor.

By the "main() routine new CGI objects are created, i.e. "main()" handles all CGI related parameters.

## Claims

1. Telecommunication system comrising
a switching network (5) for enabling telephone connections between telephone clients (6) by use of a switching network protocol;
switching means (2, 23) for controlling said telephone connections by use of switching protocol commands of said switching network protocol;
a computer network (3) for transmitting information between computer clients (1, 24) by use of a computer communication protocol;
said communication system being characterized by
server means (4, 22) for providing computer communication protocol commands for controlling said switching means (2, 23);
protocol integration means (20) provided between said switching means (2, 23) and said server means (4, 22) for converting said computer communication protocol commands into said switching protocol commands, and vice versa.

2. System according to claim 1, where said computer network is a wide area network (WAN) or a local area network (LAN) utilizing a HTTP protocol for communication.

3. System according to claim 1 or 2, where said protocol integration means specifies Universal Resource Locator (URL) syntax and semantics.

4. Method for connecting a telephone switching network with a computer network, wherein said switching network comprises a switching unit providing a switching network protocol and said computer network comprises at least one computer server utilizing a computer communication protocol, said method being characterized in that
providing in said computer server telephony commands for controlling said switching unit;
mapping said computer commmunication protocol onto said switching network protocol; and
executing said telephony commands of the computer communication protocol by use of respective control commands of said switching network protocol.

5. Method according to claim 4, wherein said server performs the steps of
recognizing a Universal Resource Locator (URL) which provides said mapping with a respective syntax and semantics;
starting a process for executing said control commands.
